# EUROPEAN PATENT SPECIFICATION

(11) **EP 3 551 561 B1**
(45) Date of publication and mention of the grant of the patent: **05.01.2022**
(21) Application number: 17735627.6
(22) Date of filing: 23.05.2017
(51) Int. Cl.: B65G 67/02, B65G 67/20

(54) **A SYSTEM FOR ITEM LOGISTICS AND A MOBILE CONTAINER OF BOXES USED IN THIS SYSTEM**
SYSTEM FÜR ARTIKELLOGISTIK UND MOBILER BEHÄLTER VON SCHACHTELN ZUR VERWENDUNG IN DIESEM SYSTEM
SYSTÈME POUR LOGISTIQUE D'ARTICLES ET CONTENEUR MOBILE DE BOÎTES UTILISÉ DANS CE SYSTÈME

(30) Priority: 09.12.2016 LT 2016532
(43) Date of publication of application: 16.10.2019
(73) Proprietor: AB Auga Group, 08130 Vilnius (LT)
(72) Inventor: JUSCIUS, Kestutis, LT-08130 Vilnius (LT)
(74) Representative: Zaboliene, Reda
(86) International application number: PCT/IB2017/053020
(87) International publication number: WO 2018/104801

(56) References cited:
- WO-A1-2014/116947
- DE-A1-102015 014 714
- DE-B- 1 285 951
- GB-A- 910 538
- JP-A- H09 132 328
- JP-A- H10 105 238
- US-A1- 2015 151 912
- US-B1- 7 500 448

## Description

### FIELD OF THE INVENTION

The invention relates to the field of the transportation, distribution, logistics, in particular, to constructions of mobile containers used in this field.

### DESCRIPTION OF THE RELATED ART

Optimal distribution of purchased items between a logistics warehouse and a place, from which a final buyer takes purchased items, is a field to whose improvement attention and effort is constantly given. The aim is to ensure the most convenient distribution and logistics of purchased items with the lowest possible costs and / or losses for customers. As information technologies strongly penetrate into all segments of our lives, new opportunities appear; delivery of purchased items to buyers is no exception. One of those possibilities offered by information technologies is that customers order purchased items online, purchased items are delivered to the item order delivery point. In the case of large quantities of delivered items, common delivery points, where items delivered from the warehouse are placed in separate boxes and shelves with locks, from which the buyer takes items, are no longer suitable. In case of large quantities of items delivered, such delivery points have to be very large, because of that it becomes more difficult to install them in places that serve a large flow of customers, it takes long time to place delivered items into specific boxes and shelves, and it becomes inconvenient for buyers to use such points. A solution, which facilitates the use of a point for both those who transport items and those who take them, is necessary.

This description provides a system for item logistics between the warehouse and the item order delivery point and a container, which is the most important component of such system, resolving the above mentioned problems, used in this system. The mentioned container has technical measures allowing to move, change the location on a stable surface, as well as the container is equipped with an electronic movement and positioning control system with artificial intelligence measures that enable decision making for controlling parameters of movement of a container in relation to the environment of movement of containers, selection of a place for the container in a vehicle and a point, to provide the fastest automatic exchange of containers between the vehicle and the point. Container control system operates in accordance to surrounding containers. The container can independently move in the vehicle and the point.

The patent document US2012 / 0099953A1 (published on 26 April 2012) provides a shuttle for a warehouse, whose wheels are driven by an electric motor, controlled by the controller that receives control commands from a general warehouse system controller, and the mentioned controller is equipped with technical measures, which provide possibilities to inform about the shuttle in the warehouse. In this case the shuttle is equipped with a simple control system that can execute commands received from a central control system and to inform about its position in the warehouse. The control system is simple, rigid, and unable to independently make complex decisions and low customizable.

The patent document US2016 / 0236866A1 (published on 18 August 2016) provides an autonomous transport vehicle for transferring case units to and from predefined storage areas. The document describes a vehicle that has a higher level of independence than the device mentioned in a document US2012 / 0099953A1, but is designed to move only in a single environment, under well-defined conditions, and cannot make decisions under more uncertain conditions. JPH09132328A discloses a system according to the preamble of claim 1.

The invention is defined by the system according to claim 1.

The above solutions of the related art are characterized by the following shortcomings:
- item transport device has no or insufficient technical measures that would ensure the shortest duration for automatic exchange between the vehicle and the delivery point;
- item transport device is not suitable to move in the vehicle, the delivery point and between them;
- control unit for the item transport device operates regardless of other transport devices.

Technical solutions with such shortcomings cannot effectively ensure the fast exchange of items between the vehicle and the delivery point. A technical solution that avoids mentioned shortcomings is provided below.

This description provides a new fast item distribution logistics system and its key element - a mobile container of boxes allowing such system to be realized. A mobile container of boxes is equipped with a movement enabling technical measures and control system with artificial intelligence measures. A container controlled by such control system may be automatically loaded from the vehicle into the item delivery point and empty containers may be loaded back into the vehicle. Containers can also change the location in the vehicle and the point in order to ensure the fastest exchange of containers between the vehicle and the point.

Due to the high level of automation, the system provides a faster and cheaper distribution and delivery of items from the warehouse to buyers of items than common distribution systems. Also for the operation of such system less human workforce is needed.

### BRIEF DESCRIPTION OF DRAWINGS

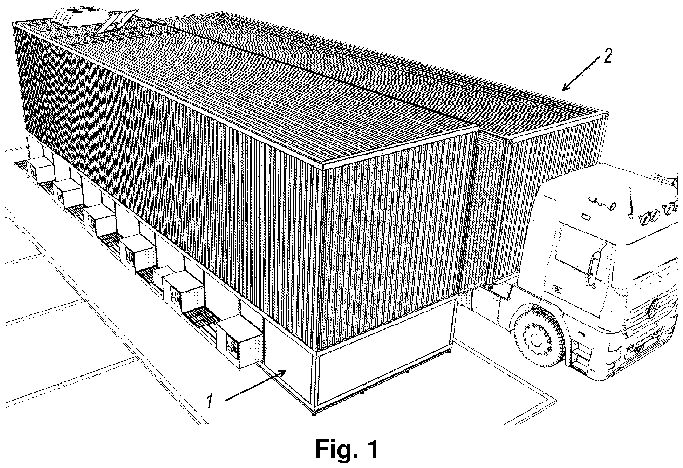

Fig.1 provides a general view of a vehicle and a point.

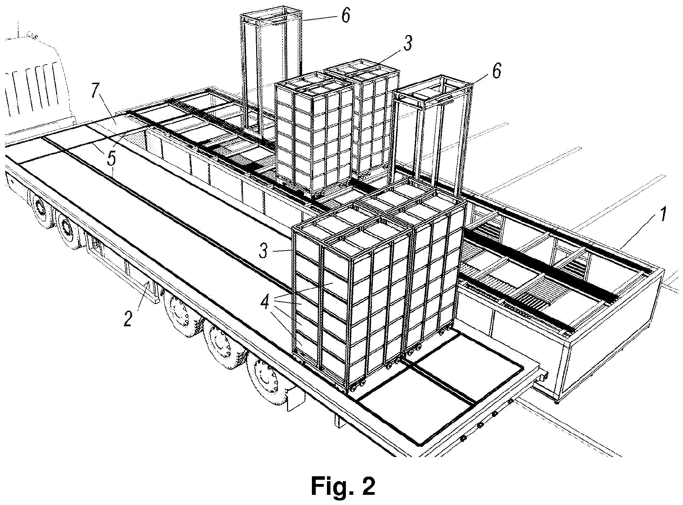

Fig. 2 provides a general view of a vehicle and a point where the vehicle and the point is represented by the absence of external walls and membranes in order to show a possible arrangement of elements inside the vehicle and the point

The provided figures are more illustrative in nature, scale, proportion and other aspects do not necessarily reflect the actual technical solution.

### DESCRIPTION OF THE PREFERED EMBODIMENTS

This description provides a system for item delivery, distribution, and logistics from the distribution warehouse to the item order delivery point and the mobile container of boxes used in this system, which ensures the function of this system. The system allows distributing purchased items to delivery points much faster than before the former; due to the high level of automation, a system is less crowded.

The mentioned logistics system has at least the following elements:
- item collecting, storage and distribution warehouse (hereinafter - the warehouse);
- item order delivery point (hereinafter - the point) (1);
- vehicle (2) for transporting items and their transport containers (containers (3), boxes (4)) between the warehouse (s) and the point (s) (1);
- a container (3), which can move and change the location in the warehouse, the point (1), and the vehicle (2) under the existing software with artificial intelligence measures; boxes(3) which are placed into a container (4);
- a box (4) in which items are put and which is placed into a container (3).

The item storage and distribution **warehouse** is for distributing item quantities. Mostly item manufacturers deliver their items produced in different quantities to the warehouse. Items delivered by manufacturers are checked, if necessary, sorted or otherwise prepared for storage and directed to the storage place and containers. Upon receipt of a purchase order, items are delivered from storage places and containers to the place in the warehouse (or close to it), where items are checked, sorted and prepared for transportation to points (1) and in accordance with those orders they are placed into boxes (4). Items are placed into boxes (4) in accordance with quantities and types specified in the order received from the buyer. A single customer order may be placed in one or more boxes (4). The box (4) is placed into the container (3), where other boxes (4), which will be delivered to the same point (1), are put, i.e. only boxes (4) which buyers will take from the same point (1) are placed into the container (3). The container (3) is moved or moves itself in accordance with the existing program to the place for loading the vehicle (2), where containers (3) for delivering to the same point (1) or points (1) which are provided in a route for a particular vehicle (2), are stored. Containers (3) are lined up in the place for loading in such order and sequence as they will be unloaded from the vehicle (2) into points (1).

**A vehicle** (2) for transporting containers (3) and boxes (4) is placed into these containers with items or without them between the warehouse and a point (1). The vehicle (2) is a truck for transporting cargos with a trailer (s) or without them; the cargo compartment of a truck at the time of the freight has to be covered on all sides to protect the transported items. The cargo compartment of a truck must contain at least one container. Also a vehicle (2) should have a possibility to load / unload transported containers (3) preferably through the side of the vehicle (2) and / or its trailer side, i.e. the cargo compartment must be able to remove covers for protecting the cargo during its transportation, to provide other possibilities necessary for loading and / or unloading a container (3).

In other embodiment, rails and guides (5) can be installed in the floor or on the floor of the cargo compartment of a vehicle (2). In this case, rails (5) are transverse cross-section elongated elements made of metal or any other material having similar physical properties that are stably attached to the floor of the cargo compartment of the vehicle (2) on which containers (3) roll. Rails (5) are arranged according to openings of the cargo, through which containers (3) are loaded and / or unloaded, and to the form of the floor of the vehicle (2). In one of embodiments, openings and places for loading and / or unloading containers (3) are installed on the side of the cargo compartment; the one is installed in very front of the cargo compartment; the other is installed at very rear of the cargo compartment. In order to properly install openings it is necessary to remove completely the side of the cargo compartment through which containers move (3) and to extend rails (5) in the floor to the edge of the side of the floor. In this case, when two openings for loading / unloading are installed in the cargo compartment, rails (5) are installed in two pairs on the floor of the cargo compartment along the cargo compartment. In places where containers (3) are loaded / unloaded, rails (5) are installed perpendicular to the longitudinal axis of the cargo compartment. The longitudinal rails (5) and perpendicular to the longitudinal rails (5) must be connected in such a way that containers (3) could move on both longitudinal rails (5) and perpendicular to the longitudinal rails and move from the longitudinal rails (5) to the perpendicular to the longitudinal rails and / or vice versa; it should be able to move in a circle, through the entire perimeter of the cargo compartment. Transverse cross-section of rails (5) must be in a form that can be properly attached to the floor of the cargo compartment. In other embodiment, the transverse cross-section of rails (5) and wheels of the container (3) which rest on the rail (5), may be matched shapes that rails (5) could hold the container (3) in vertical position, i.e. the wheel would not be only placed on rails (5), but also fastened in such a way that it does not break and move away from rails (5) and that the container (3) could no longer maintain the vertical position.

**Item order delivery point** (1) is for delivering boxes (4) with items to buyers who ordered them. When items are delivered to points (1), boxes (4) used to deliver orders may be returned to the container (3) and transported back to the warehouse for reuse.

A shape of the point (1) can recall a cuboid or similar geometric shape. Mostly outer walls of the point (1) are made of metal in the factory, when they are made; they are brought and installed in a permanent location of the point (1). The point (1) can be transportable, i.e. adapted to be easily transported from one location to another. Inside the point (1) equipment for storing and delivering items to buyers are installed. The mentioned equipment for storing and delivering in the point (1) is set out on two levels. Containers (3) with items in boxes (4) are placed on the upper level; Items are placed on this level before customers arrive to take them away. On the upper level devices (6) for taking boxes (4) from the container (3) and for transferring to the lower level and taking empty boxes (4) from the lower level and placing them into the container (s) (3) for empty boxes (4).

Devices (6) for taking boxes (4) in the point (1) are of such shape and size that containers (3) could fit under and between mentioned units, i.e. a taking device (6) "straddles" the container (3). Lower the level of the equipment of the point (1) is for sorting boxes (4), placing temporarily before the delivery in order to speed up the process of delivering boxes (4), or for other purposes, for transferring boxes (4) to delivery devices. Containers (3) transported by vehicles (2) are unloaded into points from the other side than devices for delivering boxes. For the proper loading of the container (3), points (1) are equipped with flat connectors - bridges (7), which are used to connect the vehicle (2) with the point (1), to execute a function of the connector, bridge when the container (3) move between the vehicle (2) and a point (1) on the surface of the flat connector (7). A flat connector (7) can be moved up and down while maintaining a horizontal plane in order to adapt to a possible different height of the floor of the cargo compartment of the vehicle. Rails (5), on which the container (3) moves from the vehicle (2) to the point (1), can be installed on the surface of the flat connector (7). Rails (5) must be connected to rails installed in the vehicle (2) that the container (3) could properly move from rails of the vehicle (2) to rails (5) in a point (1).

**The container** (3) consists of the base, a frame construction in form of shelves located on the base into which boxes (4) with items are placed and attached. In one embodiment, the container (3) shall be sized according to usual logistics system cargo dimensions, for example, according to the pallet size and the potential height is selected according to the most common height of the cargo compartment of the vehicle. In other embodiment, dimensions of the base of the container (3) may be the following: width: - 1.2 m, length ~ 1.2m. The base of the container (3) is equipped with technical measures such as wheels enabling the movement of the container (3) on the horizontal plane. Wheels may be connected to devices generating the torque force such as an electric motor or an electric motor with various measures modificating rotary motion. Electric motors are controlled by electronic control devices equipped with software with artificial intelligence measures. Wheels are attached to the base of the container (3) in such way that they could change the direction of the movement of the container (3). In other embodiment, the base of the container (3) is equipped with technical software measures which are able to hold the container (3) in vertical position, although the base on which the container (3) moves can be tilted a little to horizontal position. In one of embodiments, the container (3) has sensors for measuring distance to surrounding objects and software measures which allow avoiding collisions with other objects. In other embodiment, the container (3) can have a scanner to scan tags, where tags are attached onto external objects (e. g. on the floor, walls and ceiling of a vehicle (2) or a point (1)) and help the moving container (3) to achieve the purpose, also help to properly position and control the movement with regard to external objects.

In other embodiment, the container (3) can move on rails (5), guides installed in the warehouse, the vehicle (2), or the point (1). Rails (5) allow avoiding the ground roughness, and also enable to precisely control and monitor the container (3) and the movement path. In other embodiment, power required for the movement of the container (3) can be supplied through rails (5).

In other embodiment, the base of the container (3) consists of only vertical supports holding the container (3), legs of the container (3) mounted at edges of the container (3) resting on the base on which the container (3) is placed. In the embodiment, when the container (3) comprises mentioned vertical supports, the drive unit of the container (3) which is separated from the container (3) can be used to transport the container from one location to another. The mentioned drive unit of the container (3) and mentioned supports holding the container (3) must be such that the drive unit could pass between supports without touching them. The drive unit of the container (3) stops under the container (3), connects to a container (3), slightly lifts the container (3) from the base on which the container (3) is placed. The drive unit lifted up a container (3) can transport it. In this embodiment, a single device can be used to transport a number of containers (3) at different times: after transporting one container, the drive device may transport the other container (3). Due to vertical supports of the container, the drive unit is placed under the container (3) and therefore the drive unit can go to any container (3) without spacing between containers (3).

In another embodiment, in order to ensure the movement of the container (3) external drive measures installed in objects surrounding a container (3) i.e. in the warehouse, the vehicle (2), or the point (1). In this case the container (3) must connect, be connected to the external drive unit before starting to move and disconnect, be disconnected after finishing to move.

As mentioned above, the container (3) is controlled by an electronic control system. This description provides artificial intelligence measures installed in a control system of the container (3). Artificial intelligence measures understand various mathematical-statistical models (e. g. fuzzy logic, artificial neural networks, etc.), installed in the electronic device control units. Electronic control measures are understood as a hardware of the control system which can be placed into the container (3) (if the drive unit is installed in the container (3)), or separate from the container (3) (if the drive unit is separated from the container (3)) or partially in the container (3) partially in a separate device. The software of the control system is installed in these electronic measures.

The control system of the container (3) characterized by artificial intelligence achieving the highest speed of the automatic exchange of containers (3) between the vehicle (2) and the point (1) is able to optimize the placement and exchange of containers (3) in the vehicle (2) and the point (1) in order to achieve the fastest exchange of containers (3). Optimization result is the location, movement trajectories (and / or other motion parameters) of the container (3) in the vehicle (2) and the point (1), interactions among several adjacent containers (3) in order to ensure optimum locations.

In addition to the optimization function, the control system of the container (3) characterized by artificial intelligence has the ability to continually learn and improve optimal locations and their assurance methods. In order to ensure the learning function, feedback, enabling to monitor the actual duration for the exchange of containers (3) is installed. Monitoring the actual duration for the exchange of containers (3) and comparing them with the optimization results, the possible causes of non-compliance, which are assessed and used for subsequent optimization cases, are identified.

Learning function creates assumptions for adaptability features. The control system compares the exchange optimization results with real exchange results, analyze the possible causes of discrepancies with regard to the above reasons, adjusts the optimization algorithm, i.e. it adapts to characteristics of the controlled object. Very large discrepancies may indicate the occurrence of mechanical failure (wear), thus the control system with artificial intelligence is able to identify some failures, as well as to carry out their prevention.

In order to identify the container (3), the container (3) has an electronic tagging device, an electronic tag (e. g. based on RFID) containing information which may be read by a reader from a distance. A tag contains information about a container (3) and other information. In other embodiment, the information about the container (3) and / or other information may be recorded on a tag i.e. information can be easily kept up to date on demand.

When the appropriate quantity of items ordered by the buyer are collected and placed into box (-es) (4) in the warehouse, the box (4) is placed into a container (3) which contains all the boxes (4) for a single and the same point (1) (buyers will take all the boxes from the same point (1)). A container (3) with boxes (4) in the warehouse is moved or moves itself to the intermediate storage, where containers (3) transported by a single vehicle (2) in a specific route are collected and grouped. Containers (3) are placed into the vehicle (2) in a manner that is most convenient to unload in different points. Containers (3) can move in the vehicle (2), i.e. they can change their location in order to optimally locate in the vehicle (2) and to prepare for the fastest possible unloading of full containers (3) from the vehicle (2) to the point (1) and loading of containers (3) with empty boxes (4) from the point (1) to the vehicle (2). When the container (3) is transported to a specific point (1), containers (3) with items are unloaded into points (1) and containers (3) with empty boxes (4) are loaded from the point (1) into the vehicle (2). A container (3) in the vehicle (2) can change its location in order to prepare for the next automatic loading / unloading. Containers (3) in a point (1) may also change their location in order to prepare for as much as possible faster and smoother automatic loading / unloading. The unloading device (6) of the container (3) of the point (1) allows a box (4) to be taken from the container (3) down to the lower level in order to prepare and deliver items to buyers as soon as possible. At the lower level, a temporary placing of boxes (4) with items, distribution to deliver a box (4) via an appropriate device for delivering boxes (4), collection of empty boxes (4), their transportation to a place at a lower level where they are lifted to the upper level, in which they are placed into a container (s) (3) for empty boxes (4). While full containers with items are unloaded through one loading / unloading opening of the vehicle (2), containers (3) with empty boxes may be loaded into the vehicle (2) from the point (1) through the other opening of the vehicle (2). There is another way for the exchange of containers (3) between the vehicle (2) and the point (1).

Throughout the logistics chain from the placement into boxes (4) in the warehouse to taking from the point (1) by the buyer, items are protected from external influences. This is particularly important for food products. In this specification the term "items" may also include perishable food products, vegetables, and fruits and so on.

To illustrate and describe this invention, description of preferred embodiments is given above. This is not a complete or limiting description aimed at prescribing a precise form or embodiment. The description given above should be regarded more as an illustration than a constraint. Obviously, the specialists in this field may clearly see a multitude of modifications and variations. The embodiment has been selected and described so as to enable the specialists in this field to best understand the principles behind this invention and their best practical application for different embodiments with different modifications fit for a specific application or embodiment customization. The invention scope is defined by the attached claim wherein all the used terms have the broadest possible meanings unless stated otherwise.

Embodiments described by specialists in the respective field may contain changes that do not depart from the scope of this invention, as described in the claim given next.

## Claims

1. Item logistics system, comprising a container (3) for placing boxes (4),
the container (3) having a base on which a frame-type construction, in which boxes (4) are placed, is mounted, the container (3) comprising wheels or other movement enabling technical measures wherein the system comprises an external drive unit, wherein a drive control device is equipped with technical measures allowing the container (3) to change the location according to the given algorithm with artificial intelligence measures, which are mounted in the lower part of the base, the item logistics system comprising a vehicle (2), a delivery point (1) and a flat connector (7),
wherein the external drive unit is separated from the container (3),
and wherein the external drive unit can connect to a container (3) and thereby change its location,
**characterized in that** the item logistics system comprises rails and guides (5),
wherein the container (3) rests with the wheels or other movement enabling technical measures on the rails and guides (5) installed in the floor of the vehicle (2) and on the floor in the delivery point (1),
and wherein the rails (5) for the container (3) extend through the flat connector (7) used for the automatic exchange of containers (3) between the vehicle (2) and the delivery point (1).

## Patentansprüche

1. Stückgutlogistiksystem, umfassend einen Container (3) zum Abstellen von Kisten (4), wobei der Container (3) einen Sockel umfasst, auf dem eine rahmenartige Konstruktion montiert ist, in die Kisten (4) gestellt werden, und der Container (3) mit Rädern oder anderen bewegungsermöglichenden technischen Maßnahmen ausgestattet ist, wobei das System eine externe Antriebseinheit umfasst, wobei eine Antriebssteuervorrichtung mit technischen Maßnahmen ausgestattet ist, die im unteren Teil des Sockels montiert sind und es dem Container (3) ermöglichen, den Standort gemäß dem gegebenen Algorithmus mit Methoden der künstlichen Intelligenz zu ändern, wobei das Stückgutlogistiksystem ein Fahrzeug (2), eine Anlieferstelle (1) und ein flaches Verbindungselement (7) umfasst, wobei die externe Antriebseinheit vom Container (3) getrennt ist und wobei der Container (3) mit der externen Antriebseinheit verbunden werden und dadurch seinen Standort wechseln kann,
**dadurch gekennzeichnet, dass** das Stückgutlogistiksystem aus Schienen und Führungen (5) besteht, wobei der Container (3) mit den Rädern oder sonstigen bewegungsermöglichenden technischen Maßnahmen auf den eingebauten Schienen und Führungen (5) aufliegt, die auf dem Boden des Fahrzeugs (2) und auf dem Boden der Anlieferstelle (1) montiert sind, und wobei die Schienen (5) für den Container (3) durch das flache Verbindungselement (7) verlaufen, das zum automatischen Containerwechsel (3) zwischen Fahrzeug (2) und Anlieferstelle (1) dient.

## Revendications

1. Système de logistique d'articles, comprenant un conteneur (3) pour placer des boîtes (4), le conteneur (3) ayant une base sur laquelle une
construction de type cadre, dans laquelle les boîtes (4) sont placées, est montée,
le conteneur (3) comprenant des roues ou un autre mouvement permettant des mesures techniques, dans lequel le système comprend une unité d'entraînement externe,
dans lequel un dispositif de commande d'entraînement est équipé de mesures techniques permettant au conteneur
(3) de
changer l'emplacement selon l'algorithme donné avec des mesures d'intelligence artificielle, qui sont montées dans la partie inférieure de la base,
le système de logistique d'articles comprenant un véhicule (2), un point de livraison (1) et un connecteur plat (7),
dans lequel l'unité d'entraînement externe est séparée du conteneur (3),
et dans lequel l'unité d'entraînement externe peut se connecter à un conteneur (3) et ainsi changer son emplacement, **caractérisé en ce que** le système de logistique d'articles comprend des rails et des guides (5), dans lequel le conteneur (3) s'appuie sur des roues ou tout autre mouvement permettant des mesures techniques sur les rails et guides (5) installés dans le plancher du véhicule (2) et sur le plancher dans le point de livraison (1),
et dans lequel les rails (5) pour le conteneur (3) s'étendent à travers le connecteur plat (7) utilisé pour l'échange automatique de conteneurs (3) entre le véhicule (2) et le point de livraison (1).
